# EUROPÄISCHE PATENTANMELDUNG

(11) **EP 3 357 571 A1**
(43) Veröffentlichungstag der Anmeldung: **08.08.2018**
(21) Anmeldenummer: 17154966.0
(22) Anmeldetag: 07.02.2017
(51) Int. Cl.: B01J 3/00, A62C 3/00, A62C 3/04

(54) **VERFAHREN ZUR VERMEIDUNG UND LÖSCHUNG EINER DEFLAGRATION BEI DEFLAGRATIONSFÄHIGEN STOFFEN**

(71) Anmelder: Bayer Aktiengesellschaft, 51373 Leverkusen (DE)
(72) Erfinder: Morhenn, Heinrich, 50829 Köln (DE); Pohl, Uwe, 51375 Leverkusen (DE)
(74) Vertreter: BIP Patents

(57) **Zusammenfassung**

Die Erfindung betrifft ein Verfahren zur Verarbeitung und/oder Handhabung von deflagrationsfähigen Feststoffen und/oder Gemischen, insbesondere zur Verarbeitung deflagrationsfähiger Stoffe in der chemischen und pharmazeutischen Industrie, wobei die Verarbeitung und / oder Handhabung in einer Umgebung unter reduziertem Druck von <500 mbara erfolgt und die Aufhebung des reduzierten Drucks nur dann erfolgt, wenn anhand bestimmter Parameter eine Deflagration ausgeschlossen werden kann, und bei Nichtausschließen einer Deflagration Maßnahmen zur Löschung der Deflagration eingeleitet werden, wobei die Verarbeitung und/oder Handhabung ein oder mehrere Verfahrensschritten umfasst, selektiert aus einer Gruppe umfassend Filtration, Mahlen, Sieben, Mischen, Homogenisieren, Granulieren, Kompaktieren, Abfüllen, Trocknen, Lagern und Transport in einem Transportbehälter sowie sonstigen Schritten in Apparaten mit mechanischen Einbauten.

## Beschreibung

Die Erfindung betrifft ein Verfahren zur Verarbeitung und/oder Handhabung von deflagrationsfähigen Feststoffen und/oder Gemischen, insbesondere zur Verarbeitung deflagrationsfähiger Stoffe in der chemischen und pharmazeutischen Industrie, wobei die Verarbeitung und Handhabung in einer Umgebung unter reduziertem Druck erfolgt und die Aufhebung des reduzierten Drucks nur dann erfolgt, wenn anhand bestimmter Parameter eine Deflagration ausgeschlossen werden kann, und bei Nichtausschließen einer Deflagration Maßnahmen zur Löschung der Deflagration durchgeführt werden.

Die Technische Regel für Anlagensicherheit (TRAS) Nr. 410 definiert eine Deflagration wie folgt: "Eine Deflagration ist eine Reaktion, die an einer vorgegebenen Stoffmenge örtlich begrenzt auslösbar ist und die sich von dort selbständig durch die gesamte Stoffmenge hindurch in Form einer Reaktionsfront fortpflanzt. Die Fortpflanzungsgeschwindigkeit der Reaktionsfront ist niedriger als die Schallgeschwindigkeit im Stoff. Bei einer Deflagration können große Mengen an heißen Gasen freigesetzt werden, die unter Umständen auch brennbar sind. Die Deflagrationsgeschwindigkeit nimmt mit der Temperatur und in der Regel auch mit dem Druck zu".

Deflagrationsfähige Feststoffe zersetzen sich nach lokaler Einwirkung einer hinreichend starken Zündquelle (Initiierung) auch ohne Anwesenheit von Luftsauerstoff. Im Gegensatz zu einem Brand oder einer Explosion eines Luft/Gas oder Luft/Staubgemisches kann eine Deflagration nicht durch Sauerstoffausschluss unterbunden werden. Die aus dem Explosionsschutz bekannte Maßnahme der Inertisierung mit Stickstoff oder anderen inerten Gasen bietet keinen Schutz vor einer Deflagration.

Explosionen sind schnelle Deflagrationen mit sprunghaftem Druck- und Temperaturanstieg. Bei Überschreiten der Schallgeschwindigkeit geht eine Deflagration in eine Detonation über.

Bei den deflagrationsfähigen Stoffen handelt es sich zumeist um organische oder anorganische Verbindungen in fester Form. Insbesondere neigen zur Deflagration organische Verbindungen mit funktionellen Gruppen wie Kohlenstoff-Kohlenstoff Doppel- und Dreifachbindungen wie Acetylene, Acetylide, 1,2-Diene; gespannte Ringverbindungen wie Azirine oder Epoxide; Verbindungen mit aneinander grenzenden N-Atomen wie Azo- und Diazoverbindungen, Hydrazine, Azide; Verbindungen mit aneinander grenzenden O-Atomen wie Peroxide und Ozonide; Sauerstoff-Stickstoff-Verbindungen wie Hydroxylamine, Nitrate, N-Oxide, 1,2 Oxalate, Nitro- und Nitroso-Verbindungen; Halogen-Stickstoffverbindungen wie Chloramine und Fluoramine; Halogen-Sauerstoffverbindungen wie Chlorate, Perchlorate, Jodosyl-Verbindungen; Schwefel-Sauerstoff-Verbindungen wie Sulphonylhalide, Sulphonylcyanide, und Verbindungen mit Kohlenstoff-Metall-Bindungen und Stickstoff-Metall-Bindungen wie Grignard-Reagenzien oder Organo-Lithium-Verbindungen. Jedoch können auch viele andere organische Verbindungen ohne die genannten funktionellen Gruppen und eine Vielzahl anorganischer Verbindungen deflagrationsfähig sein.

Grundsätzlich gelten alle Stoffe mit einer Zersetzungsenthalpie von größer oder gleich 500 J/g als potentiell deflagrationsfähig. Es sind auch Stoffe mit Zersetzungsenthalpie von 300 - 500 J/g bekannt, welche deflagrationsfähig sind. Die Deflagrationsfähigkeit einer Substanz muss im Einzelfall gesondert ermittelt werden.

Zur Prüfung des Deflagrationsverhaltens von Stoffen und Stoffgemischen sind verschiedene Prüfmethoden bekannt.

In dem UN Prüfbuch "Transportation of Dangerous Goods, Manual of Tests and Criteria", 5th Revised Edition, 2009, werden in Sektion 23 (S 237 ff) 2 Prüfmethoden zur Ermittlung der Deflagrationsfähigkeit beschrieben.

In dem Test C.1 ("Time/Pressure Test") werden 5 g der zu prüfenden Substanz in einem Druckgefäß mit ca. 17 ml Inhalt gezündet. Kriterien für die Bewertung sind die Erreichung eines Grenzdrucks von ca. 20,7 barü (barü = Bar Überdruck), sowie die Zeit nach Zündung, in welcher der Grenzdruck erreicht wird.

Die Deflagrationsfähigkeit wird im Test C.1 wie folgt beurteilt:
- Ja, schnell deflagrationsfähig, wenn der Druck innerhalb des Druckgefäßes nach Zündung in weniger von 30 Sekunden von 6,90 barü auf 20,70 barü ansteigt.
- Ja, langsam deflagrationsfähig, wenn der Druck innerhalb des Druckgefäßes nach Zündung in 30 Sekunden oder länger von 6,90 barü auf 20,70barü ansteigt.
- Nicht deflagrationsfähig, wenn der Grenzdruck von 20,70 barü nicht erreicht wird.

In dem Test C.2 wird eine Probe in ein Dewar-Gefäß mit etwa 48 mm innerem Durchmesser und einer Höhe von 180 - 200 mm gefüllt. Das Gemisch wird mit einer offenen Flamme gezündet.

Die Deflagrationsfähigkeit wird im Test C.2 wie folgt beurteilt:
- Ja, schnell deflagrationsfähig, wenn die Deflagrationsgeschwindigkeit größer 5 mm/sec ist.
- Ja, langsam deflagrationsfähig, wenn die Deflagrationsgeschwindigkeit zwischen 0,35 mm/sec bis 5 mm/sec liegt.
- Nicht deflagrationsfähig, wenn die Deflagrationsgeschwindigkeit kleiner 0,35 mm/sec ist, oder die Reaktion vor Erreichen der unteren Marke verlöscht.

Insgesamt wird eine Substanz als nicht deflagrationsfähig eingestuft, wenn die Substanz im Test C.1 nicht als "schnell deflagrationsfähig" und im Test C.2 als nicht deflagrationsfähig klassifiziert wurde.

Ein weiterer Test zur Ermittlung der Deflagrationsfähigkeit ist in VDI2263-1 (1990, S. 13 ff.) beschrieben. In der Prüfung nach VDI2263-1 wird eine Substanz in ein unten geschlossenes Glasrohr mit ca. 5 cm Durchmesser gefüllt, in welchem in verschiedenen Höhen radial versetzt mehrere Thermoelemente angebracht sind. Nach örtlicher Initiierung (Zündung) durch eine Glühwendel, eine Glühkerze, einen Mikrobrenner oder eine Zündmischung aus Blei(IV)-Oxid und Silizium wird die Fortschreitung der Zersetzung ermittelt. Die Initiierung erfolgt von oben und vom Boden der Schüttung aus. Breitet sich die Zersetzung in wenigstens einem der Versuche (Zündung von oben und Zündung von unten) aus, so gilt der Stoff als deflagrationsfähig. Als Zündquellen werden alternativ Glühwendel, Glühkerze, Mikrobrenner oder eine Zündmischung (Silizium/Bleioxid im Verhältnis 3:2) verwendet. Die Einwirkdauer und der Energieeintrag der Zündquellen sind nicht weiter definiert. In der Standardausführung nach VDI2263-1 wird das Deflagrationsverhalten bei Umgebungstemperatur und -druck gemessen. Es kann aber auch bei erhöhter Temperatur und im geschlossenen Gefäß gemessen werden.

Es ist bekannt, dass viele Stoffe sich in dem Test nach VDI2263-1 ohne die Ausbildung einer geschlossenen Front und auch nicht vollständig zersetzen. Häufig kommt es innerhalb der Schüttung zur Bildung von Kanälen, in deren Inneren die Zersetzung fortschreitet, während das umgebende Material sich nicht zersetzt. Ein solches Verhalten bedeutet aber für die Verarbeitung eines Stoffes ein Gefährdungspotential. Der Fachmann wird für die Prüfung des Deflagrationsverhaltens eines Stoffes oder Stoffgemisches die Parameter so auswählen, dass die Situation während der Verarbeitung am besten wiedergegeben wird. So wird eine Substanz für den Test nach VDI2263-1 auf die Temperatur gebracht werden, bei welcher auch die Verarbeitung der Substanz erfolgt. Bezüglich der Zündquelle kann man davon ausgehen, dass keine Deflagrationsfähigkeit vorliegt, wenn in der Regel nach 300 Sekunden Einwirkzeit bei einer Temperatur > 600 °C, zum Beispiel durch eine Glühwendel oder eine Glühkerze, letztere bei einer Energieaufnahme von 40 W, noch keine Fortschreitung der Reaktion zu beobachten ist. Bei der Fortschreitung der Reaktion ist jede Art der Fortführung der Zersetzung, welche sich durch die Schüttung fortpflanzt, als Zeichen für ein Deflagrationsverhalten zu werten, auch wenn eine Kanalbildung vorliegt und die Schüttung nicht in voller Breite unter Ausbildung einer Zersetzungsfront durchreagiert.

In VDI-Bericht 975 (1992) Seite 99 ff wird eine Klassierung deflagrationsgefährlicher pulverförmiger Stoffe beschrieben. Die deflagrationsfähigen Stoffe werden in 3 Gefahrenklassen eingeteilt. Während Stoffe der Gefahrenklasse 3 grundsätzlich nicht in Apparaten mit mechanischen Einbauten verarbeitet werden dürfen, können Stoffe der Gefahrenklassen 1 und 2 unter gewissen Voraussetzungen in Apparaten mit mechanischen Einbauten verarbeitet werden.

Die Herstellung von deflagrationsfähigen Feststoffen erfolgt mit den üblichen, aus der organischen und anorganischen Chemie bekannten Verfahrensschritten. Meist werden Einsatzstoffe in flüssiger Form oder in Form von Lösungen miteinander zur Reaktion gebracht, der gewünschte Stoff fällt üblicherweise als Feststoff aus. Dieser wird dann von den verbliebenen flüssigen Komponenten abgetrennt, und steht nach eventuell weiteren Reinigungsschritten, Trocknung und Zwischenlagerung in gewünschter Form für die Abfüllung und den Transport zu den Abnehmern zu Verfügung. Gegebenenfalls wird der gewünschte Stoff weiter verarbeitet und zum Beispiel gemahlen und/oder mit anderen Komponenten vermischt.

Die Herstellung von deflagrationsfähigen Feststoffen im Labormaßstab ist in der Regel unproblematisch. Die gehandhabten Mengen sind klein, die Wahrscheinlichkeit der Initiierung einer Deflagration ist gering, eventuell auftretende Deflagrationen werden schnell erkannt und selbst bei Nichterkennen und Fortschreiten einer Deflagration ist das Schadensausmaß gering.

Problematisch ist jedoch die Herstellung deflagrationsfähiger Stoffe in größeren Mengen wie sie in einem Technikumsbetrieb oder in einem Produktionsbetrieb erfolgt. Hierbei kommen eine Reihe von Apparaten zum Einsatz, welche einerseits potentielle Initiierungsquellen aufweisen, und bei welchen andererseits auf Grund der gehandhabten Mengen eine nicht oder zu spät detektierte Deflagration zu großen Schäden führen kann.

Apparate in Technika und Produktionsbetrieben sind häufig mit mechanischen Einrichtungen bestückt, welche dem Transport, der Durchmischung, der Erneuerung der Oberfläche oder andern Zwecken dienen.

So werden zum Beispiel für die Homogenisierung von Feststoffen Mischer mit bewegten mechanischen Elementen wie zum Beispiel Pflugscharmischer oder Schneckenmischer eingesetzt. Es ist bekannt, dass die mechanischen Einrichtungen eine der häufigsten Ursachen für die Initiierung einer Deflagration sind. So kann bei einer Störung ein bewegtes Mischelement in direkten Kontakt mit dem Apparatemantel kommen, an der Reibungsstelle erfolgt eine lokalen Erhitzung, welche den umgebenden Stoff zur Zersetzung bringen und so eine Deflagration initiieren kann. Es sind ebenfalls Fälle bekannt, bei welchen ein Fremdkörper, zum Beispiel eine Schraube, in einen Apparat gelangt war, dort zwischen Wandung und Rühr-/Mischorgan gelangte und durch die Erhitzung eine Deflagration auslöste. Selbst durch Reiben harter Krusten oder durch Reibung in einer verstopften Förderschnecke ist es zur Auslösung von Deflagrationen gekommen. Auch ist bekannt, dass Deflagrationen von einem Apparat in den anderen übertragen werden können. So kann in einem Mischer eine eingeschleppte Schraube in der beschriebenen Weise durch Reibung erhitzt werden. Die heiße Schraube wird dann zum Beispiel in ein Silo ohne mechanische Einbauten ausgetragen. Die Temperatur der Schraube kann noch hinreichend hoch sein, um in dem Silo die umgebende Substanz zur Zersetzung zu bringen und so eine Deflagration auszulösen. In gleicher Weise können Agglomerate, in welchen bereits eine deflagrative Zersetzung ausgelöst wurde, in einen Apparat ohne mechanische Einbauten ausgetragen werden und dort die deflagrative Zersetzung des Apparateinhalts initiieren.

Es ist eine Reihe von Maßnahmen bekannt, welche eine sichere Verarbeitung deflagrationsfähiger Stoffe ermöglichen.

Im VDI-Bericht 975 (1992) Seite 99 ff wird eine Systematik dargelegt, wie bei der Beurteilung und Auswahl von Maßnahmen bei der Verarbeitung von deflagrationsgefährlicher pulverförmigen Stoffen vorzugehen ist In dem Bericht wird eine Klassierung der deflagrationsfähigen Stoffe in 3 Gefahrenklassen beschrieben, wobei Stoffe in der Gefahrenklasse 3 das höchste Gefährdungspotential aufweisen und Stoffe in der Gefahrenklasse 1 das niedrigste Gefährdungspotential. Entsprechend der Gefährdungsklasse werden geeignete Verarbeitungsverfahren aufgeführt. Obwohl die in der genannten Veröffentlichung genannten Kriterien keine allgemeine Gültigkeit haben, stellt die in dieser Veröffentlichung dargelegte Systematik einen guten Ansatz dar, wie bei der Beurteilung und Verarbeitung von deflagrationsfähigen Stoffen vorzugehen ist. Weitere Beispiele für eine sichere Verarbeitung deflagrationsfähiger Stoffe finden sich auch in dem VDI-Bericht 1272 (1996), Seite 441 ff. Bei Stoffen mit einer hohen Deflagrationsneigung wird darauf geachtet, dass die Verarbeitung ohne mechanische Einwirkungen erfolgt. Dies geschieht beispielsweise dadurch, dass eine Trocknung auf einzelnen Tabletts in einem Trockenschrank erfolgt, statt in einem Trockner mit mechanischen Einbauten wie zum Beispiel einem Schaufeltrockner. Die Verarbeitung ohne mechanische Einrichtungen ist jedoch sehr aufwändig. Vielfach muss der Stofftransport manuell erfolgen, was neben dem hohen Aufwand auch zur Gesundheitsgefährdung des Bedienpersonals und zu Qualitätsproblemen führen kann. Die Verarbeitung ohne mechanische Einrichtung und wird nur dann in Betracht kommen, wenn eine sichere Verarbeitung mit mechanischen Einrichtungen nicht möglich ist. In der zuvor zitierten Veröffentlichung VDI-Bericht 975 (1992) Seite 99 ff sind zum Beispiel bei den Stoffen der Gefährdungsklasse 3 nur Verarbeitungsverfahren ohne mechanische Einrichtung vorgesehen.

Für Stoffe, bei welchen das Gefährdungspotential durch Deflagration weniger ausgeprägt ist, können unter bestimmten Bedingungen auch mit mechanischen Einrichtungen verarbeitet werden. In der zitierten Veröffentlichung im VDI-Bericht 975 (1992) Seite 99 ff gilt dies für Stoffe der Gefahrenklassen 1 und 2.

Ein gängiges Verfahren zur Vermeidung von Deflagrationen ist die sorgfältige Vermeidung des Eintrags von Fremdkörpern. Dies kann zum Beispiel durch eine Metallabscheidung erfolgen, welche vor den Eintrag in den Apparat erfolgt und das Mitschleppen von Schrauben und anderen metallischen Fremdkörpern in den Verarbeitungsschritt verhindert.

Auch kann beim Bau der Apparate auf die Vermeidung möglicher Zündquellen geachtet werden, zum Beispiel, in dem die Abstände zwischen mechanischem Mischer und Wandung groß gewählt werden.

Die genannten Verfahren der Zündquellenvermeidung können das Risiko einer Deflagration deutlich mindern, ausschließen lässt sich die Deflagration hierdurch aber nicht. Die genannten Methoden sind zudem aufwändig und in manchen Fällen mit einer Beeinträchtigung der Leistung der Apparate verbunden.

Ein weiteres bekanntes Verfahren zur sicheren Verarbeitung von deflagrationsfähigen Substanzen besteht darin, den bei einer Deflagration entstehenden Druck bzw. die bei der Deflagration entstehenden Gase sicher abzuführen. Dies kann zum Beispiel durch Einbau entsprechend dimensionierter Berstscheiben und entsprechender Ableiteinrichtungen erfolgen. Hierbei ist zu beachten, dass die Deflagrationsgeschwindigkeit mit steigendem Druck zunimmt, Ansprechdruck und Ableitung sind entsprechend auszulegen. Auch ist darauf zu achten, dass mitgerissene Substanzen an einer Fortführung der Deflagration gehindert werden müssen. Dies kann zum Beispiel durch Einleitung der abgeführten Gase in ein Wasserbad erfolgen.

Ein weiteres bekanntes Verfahren zur sicheren Verarbeitung von deflagrationsfähigen Substanzen besteht darin, den Beginn einer Deflagration rechtzeitig zu erkennen und die beginnende Deflagration durch Abführen der Energie zu unterbinden. Die Erkennung kann über eine Reihe von Indikatoren erfolgen. Bekannt sind zum Beispiel die Überwachung von Temperatur oder/und Druck. Bei Erreichen des Auslösewertes wird die Energie aus dem System abgeführt. In der Regel erfolgt dies durch Zugabe einer größeren Menge an Wasser. Durch die Wärmekapazität des Wassers kühlt sich die deflagrierende Substanz auf Temperaturen unterhalb der Zersetzungstemperatur ab. Eine zusätzliche Wärmeabfuhr kann durch die Entstehung von Wasserdampf erfolgen. Dem Wasser kann ein Detergenz zugegeben werden, um eine gute Benetzung der deflagrierenden Substanz zu gewährleisten. Die durch die Zufuhr und Verdampfung von Wasser bedingte Volumenzunahme muss durch geeignete Einrichtungen abgeleitet werden, um einem unerwünschten Druckaufbau entgegenzuwirken.

Ein weiteres Verfahren zur Verarbeitung und Handhabung deflagrationsfähiger Stoffe wird in WO 2014/139876 A1 beschrieben. WO 2014/139876 A1 beschreibt ein Verfahren, bei welchem die Verarbeitung und / oder Handhabung der deflagrationsfähigen Feststoffe in einer Umgebung unter reduziertem Druck erfolgt. WO 2014/139876 A1 beschreibt unter anderem die Verarbeitung und Handhabung von deflagrationsfähigen Feststoffen in gängigen chemischen Verfahrensschritten, insbesondere Filtrieren, Trocknen, Mahlen, Sieben, Mischen, Homogenisieren, Granulieren, Kompaktieren, Abfüllen, Lagern und Transport in einem Transportbehälter, sowie mechanische Transport wie z.B. die die Förderung in Förderschnecken oder durch Zellradschleusen. Besonders vorteilhaft ist das in WO 2014/139876 A1 beschriebene Verfahren für die Verarbeitung und Handhabung deflagrationsfähiger Feststoffe in Apparaten mit mechanischen Einbauten. Während WO 2014/139876 A1 detailliert die Verarbeitung deflagrationsfähiger Stoffe unter reduziertem Druck beschreibt, gibt WO 2014/139876 A1 keine Hinweise darauf, wie die deflagrationsfähigen Stoffe nach Beendigung des jeweiligen Verfahrensschrittes oder am Ende des Herstellungs- bzw. Handhabungsprozesses wieder sicher auf Umgebungsdruck gebracht werden können.

In der EP17154912.4 wird ein Verfahren für die Verarbeitung und/oder Handhabung von deflagrationsfähigen Stoffen unter reduziertem Druck beschrieben, bei welchem die Aufhebung des reduzierten Drucks erst dann erfolgt, wenn eine Zündquelle abgeschaltet ist und zwischen Abschalten der potentiellen Zündquelle und Aufheben des reduzierten Drucks eine Wartezeit eingehalten wird. Die Wartezeit wird mit 10 bis 60 Minuten angegeben.

Das in dort beschriebene Verfahren hat den Nachteil, dass es keine Kriterien für die Festlegung der Wartezeit angegeben sind.

Ferner ist nicht auszuschließen, dass bei Stoffen mit starker Deflagrationsneigung auch bei reduziertem Druck ein Fortschreiten der Deflagration erfolgt mit Gasentwicklung und Druckaufbau, welche zu einem Versagen der Apparate führen kann. Hier bieten weder WO 2014/139876 A1 noch EP17154912.4 eine Lösung an.

Die Aufgabe der vorliegenden Erfindung lag daher darin, ein Verfahren zu finden für die Verarbeitung und/oder Handhabung deflagrationsfähiger Feststoffe in einer Umgebung unter reduziertem Druck, welches eine Aufhebung des reduzierten Drucks ermöglicht mit sicherem Ausschluss einer Deflagration, wobei bei einer bereits einsetzenden Deflagration sichere Maßnahmen zur Beendigung der Deflagration zu finden sind.

Die Aufgabe wird durch ein Verfahren gelöst, bei welchem bei der Verarbeitung und Handhabung eines deflagrationsfähigen Stoffes unter reduziertem Druck Maßnahmen zur Detektion einer Deflagration ergriffen werden und die Aufhebung des reduzierten Drucks erst dann erfolgt, wenn eine Deflagration ausgeschlossen werden kann, und bei Nicht-Ausschließen einer Deflagration Maßnahmen zur Beendigung der Deflagration ergriffen werden.

Die erfindungsgemäße Verfahren ist für die Verarbeitung und/oder Handhabung von deflagrationsfähigen Feststoffen und/oder Gemischen anwendbar, welches dadurch gekennzeichnet ist, dass die Verarbeitung und/oder Handhabung in einer Umgebung unter reduziertem Druck von < 500 mbara (mbara = absoluter Druck in Millibar) erfolgt und die Aufhebung des reduzierten Drucks erst dann erfolgt, wenn eine Deflagration ausgeschlossen werden kann, wobei die Verarbeitung und/oder Handhabung ein oder mehrere Verfahrensschritte umfasst, welche selektiert sind aus einer Gruppe umfassend Filtration, Mahlen, Sieben, Mischen, Homogenisieren, Granulieren, Kompaktieren, Abfüllen, Trocknen, Lagern und Transport in einem Transportbehälter sowie sonstige Schritten in Apparaten mit mechanischen Einbauten.

Das Vorliegen einer möglichen Deflagration kann nach Abschalten des Antriebs der mechanischen Einbauten festgestellt werden, oder aber auch bei weiter laufendem Antrieb.

Für die Detektion einer Deflagration werden erfindungsgemäß eines oder mehrere Parameter herangezogen, welche auf eine beginnende Zersetzung bzw. Deflagration hinweisen. Solche Parameter sind ein Ansteigen des Drucks, der Temperatur, das Auftreten von Zersetzungsprodukten oder andere, als Folge einer Deflagration messbare Merkmale sein, sowie eine Kombination mehrerer Merkmale.

Als Maßnahmen zur Beendigung der Deflagration wird die Aufrechterhaltung des Unterdrucks bevorzugt.

Eine weitere Maßnahme zur Beendigung der Deflagration ist die Zugabe eines Löschmittels in den unter Unterdruck stehenden Apparat, wobei es sich bei dem Löschmittel bevorzugt um Wasser oder um mit Tensiden versetztes Wasser handelt und der Druck im Apparate bei Beginn der Löschmittel-Zugabe erfindungsgemäß < 700 mbara beträgt. Die Löschmittel-Zugabe kann jeweils vom Anlagenfahrer von Hand ausgelöst werden. Die Löschmittel-Zugabe kann aber auch durch für den vorgegebene Grenzwerte jeweils automatisch ausgelöst werden.

Ein Anzeichen einer beginnenden Deflagration ist der Anstieg des Drucks im Apparat. Erhöht sich der Druck bei wirksamer Unterdruckquelle, so ist dies ein Anzeichen für eine beginnende Deflagration. Als Gegenmaßnahme gegen die beginnende Deflagration kann der Antrieb der mechanischen Einbauten abgestellt werden bei Beibehaltung der Verbindung zur Unterdruckquelle. Sofern sich noch keine selbstständig fortsetzende Zersetzung gebildet hat, wird die Zersetzung unter Vakuum erlöschen. Eine weitere Möglichkeit zum Ablöschen der Deflagration ist die Zugabe eines Löschmittels, bevorzugt die Zufuhr von Wasser oder von mit Tensiden versetztem Wasser zum Ablöschen der Deflagration. Die Zugabe des Löschmittels kann zum Beispiel automatisch an einen gewissen Grenzwert für den Druck gekoppelt werden, bei dessen Überschreiten im jeweiligen Prozessschritt die Quenche automatisch ausgelöst wird. Der Grenzwert ist jeweils entsprechend dem jeweiligen Verfahren festzulegen.

Vor Aufhebung des reduzierten Drucks wird der Apparat sinnvollerweise von der UnterdruckQuelle getrennt. Legt man zwischen Trennen der Unterdruckquelle und Aufheben des Unterdrucks eine Wartezeit und beobachtet während dieser Zeit den Druck, so ist ein Druckanstieg oberhalb der Leckrate des Apparates ein Anzeichen für eine beginnende Deflagration. Die Leckrate des Apparates entspricht dem Druckanstieg, welcher auf Grund diverser kleiner Undichtigkeiten am Apparat zu beobachten ist. Die Leckrate kann vor dem Befüllen des Apparates mit Produkt mittels dem Fachmann bekannter Maßnahmen ermittelt werden. Erfindungsgemäß erfolgt bei einem Druckanstieg oberhalb der Leckrate oder eines thermischen Druckaufbaus keine Aufhebung des reduzierten Drucks. Stattdessen werden Gegenmaßnahmen zur Eindämmung einer beginnenden Deflagration ergriffen. Bevorzugt im Sinne dieser Erfindung erfolgt eine Wiederherstellung der Verbindung zur Unterdruckquelle, um den reduzierten Druck wieder herzustellen und ein Verlöschen der Deflagration zu bewirken. Die beginnende Deflagration kann aber auch durch Zugabe von Wasser, mit Tensiden versetztem Wasser oder eines andern Stoffes gelöscht werden.

Die Wartezeit für die Beobachtung des Drucks nach Trennen der Unterdruckquelle bis zur Aufhebung des Unterdrucks beträgt bevorzugt 5 Minuten. Entsprechend der Größe des Apparates, der Leckrate, dem Füllgrad, den Eigenschaften der Gasentwicklungsrate können andere Wartezeiten festgelegt werden. Der Fachmann wird im Einzelfall an Hand der Deflagrationsgeschwindigkeit und der daraus resultierenden Gasentwicklung sowie der Apparategröße und dem freien Volumen im Apparat, des zu verarbeitenden Stoffes und gegebenenfalls weiterer Parameter die Wartezeit für die Beobachtung des Drucks nach Trennen der Unterdruckquelle festlegen, Erfindungsgemäß sollte die Zeitspanne 5 bis 60 Minuten, bevorzugt 5 bis 15 Minuten betragen. Entspricht der Druckanstieg während der Wartezeit der Leckrate, so kann nach Ende der Wartezeit das Vakuum gebrochen werden.

Der Antrieb der potentiellen mechanischen Zündquelle kann in dem im vorherigen Abschnitt beschriebenen Verfahren nach Trennen der Unterdruckquelle abgeschaltet werde, oder auch noch in Betrieb sein.

Bevorzugt wird der Antrieb der potentiellen mechanischen Zündquelle vor oder gleichzeitig mit Trennen der Unterdruckquelle ausgeschaltet.

Die potentiellen mechanischen Zündquellen können aber auch nach Trennen der Unterdruckquelle weiter in Betrieb bleiben. Dies mag bei manchen Apparaten erforderlich sein, um zum Beispiel ein Agglomerieren von Partikeln zu verhindern, oder weil das mechanische Organ für einen anschließenden Austrag von Produkt in Bewegung bleiben soll. Die Beobachtung des Drucks und die genannte Zeitspanne zwischen dem Trennen der Unterdruckquelle und dem Aufhebung des reduzierten Drucks bieten auch hier einen Schutz vor Deflagration im Sinne der vorliegenden Erfindung.

Solange der Apparat mit der Unterdruckquelle verbunden ist, wird die Unterdruckquelle entstehende Gase absaugen, ohne dass es zu einem Anstieg des Drucks im Apparat kommt. Auf diese Weise könnte die Deflagration weiter fortschreiten, bevor sie durch einen Druckanstieg detektiert wird. Um auch in einem solchen Fall eine Deflagration rechtzeitig zu erkennen, können neben dem Druck weitere Kriterien zur Detektion von Zersetzungsgasen herangezogen werden.
So kann der verstärkte Anfall von Zersetzungsgasen durch Betriebsparameter der Pumpe wie eine erhöhte Leistungsaufnahme oder ein erhöhtes Drehmoment detektiert werden. Auch die Bestimmung des Gasflusses an der Unterdruckquelle kann als Parameter für das Vorliegen einer Deflagration herangezogen werden, ein erhöhter Gasfluss würde auf eine mögliche beginnende Deflagration hindeuten. In all den zuvor beschriebenen Fällen können Grenzwerte festgelegt werden, welche ein automatisches Auslösen der Schutzmaßnahme, bevorzugt die Zufuhr von Wasser oder von mit Tensiden versetztem Wasser, auslöst.

Ein anders Anzeichen einer beginnenden Deflagration ist der Anstieg der Temperatur im Apparat. Die Temperatur wird bevorzugt in der Gasphase gemessen. Es kann aber auch die Temperatur in der Feststoff-Schüttung gemessen werden. Eventueller Temperaturerhöhungen durch externe Beheizung oder Energieeintrag durch das Mischorgan sind bei der Festlegung von Grenzwerten zu brücksichtigen. Durch die bei einer Deflagration freiwerdende Energie liegt der durch eine Deflagration verursachte Temperaturanstieg in der Regel bei Werten > 50°C.

Erhöht sich die Temperatur bei wirksamer Unterdruckquelle, so ist dies ein Anzeichen für eine beginnende Deflagration. Als Gegenmaßnahme gegen die beginnende Deflagration kann der Antrieb der mechanischen Einbauten abgestellt werden bei Beibehaltung der Verbindung zur Unterdruckquelle. Sofern sich noch keine selbstständig fortsetzende Zersetzung gebildet hat, wird die Zersetzung unter Vakuum erlöschen. Eine weitere Möglichkeit zum Ablöschen der Deflagration ist die Zugabe eines Löschmittels, bevorzugt die Zufuhr von Wasser oder von mit Tensiden versetztem Wasser zum Ablöschen der Deflagration. Die Zugabe des Löschmittels kann zum Beispiel automatisch an einen gewissen Grenzwert für die Temperatur gekoppelt werden, bei dessen Überschreiten im jeweiligen Prozessschritt die Quenche automatisch ausgelöst wird. Der Grenzwert ist jeweils entsprechend dem jeweiligen Verfahren festzulegen.

Vor Aufhebung des reduzierten Drucks wird der Apparat sinnvollerweise von der UnterdruckQuelle getrennt. Legt man zwischen Trennen der Unterdruckquelle und Aufheben des Unterdrucks eine Wartezeit und beobachtet während dieser Zeit die Temperatur, so ist ein Temperaturanstieg ein Anzeichen für eine beginnende Deflagration.

Erfindungsgemäß erfolgt bei einem Anstieg der Temperatur keine Aufhebung des reduzierten Drucks. Stattdessen werden Gegenmaßnahmen zur Eindämmung einer beginnenden Deflagration ergriffen. Bevorzugt im Sinne dieser Erfindung erfolgt eine Wiederherstellung der Verbindung zur Unterdruckquelle, um den reduzierten Druck sicherzustellen und ein Verlöschen der Deflagration zu bewirken. Die beginnende Deflagration kann aber auch durch Zugabe von Wasser, mit Tensiden versetztem Wasser oder eines andern Stoffes gelöscht werden.

Die Wartezeit für die Beobachtung der Temperatur nach Trennen der Unterdruckquelle bis zur Aufhebung des reduzierten Drucks beträgt bevorzugt 5 Minuten. Entsprechend der Größe des Apparates, der Leckrate, dem Füllgrad, den Eigenschaften der Gasentwicklungsrate können andere Wartezeiten festgelegt werden. Der Fachmann wird im Einzelfall an Hand der Deflagrationsgeschwindigkeit und der daraus resultierenden Gasentwicklung sowie der Apparategröße und dem freien Volumen im Apparat, des zu verarbeitenden Stoffes und gegebenenfalls weiterer Parameter die Wartezeit für die Beobachtung der Temperatur nach Trennen der Unterdruckquelle festlegen. Erfindungsgemäß sollte die Zeitspanne 5 bis 60 Minuten, bevorzugt 5 bis 15 Minuten betragen.

Bleibt die Temperatur im Apparat in der Wartezeit nach Trennen der Unterdruckquelle und Aufhebung des reduzierten Drucks konstant bzw. in dem entsprechend Kühlung oder Energieeintrag zu erwartenden Bereich, so kann der Unterdruck gebrochen werden, ohne dass eine Deflagration zu befürchten ist.

Die Zeitspanne zwischen dem Trennen der Unterdruckquelle und dem Aufhebung des reduzierten Drucks wird je nach Größe und Konstruktion des Apparates, der Leckrate, dem Füllgrad, den Eigenschaften des zu verarbeitenden Stoffes und gegebenenfalls weiterer Parameter unterschiedlich festgelegt. Erfindungsgemäß beträgt die Zeitspanne 5 bis 60 Minuten, bevorzugt 10 bis 20 Minuten.

Der Antrieb der potentiellen mechanischen Zündquelle kann in dem im vorherigen Abschnitt beschriebenen Verfahren nach Trennen der Unterdruckquelle abgeschaltet werden, oder auch noch in Betrieb sein. Bevorzugt wird der Antrieb der potentiellen mechanischen Zündquelle vor oder gleichzeitig mit Trennen der Unterdruckquelle ausgeschaltet.

Die potentiellen mechanischen Zündquellen können aber auch nach Trennen der Unterdruckquelle weiter in Betrieb bleiben. Dies mag bei manchen Apparaten erforderlich sein, um zum Beispiel ein Agglomerieren von Partikeln zu verhindern, oder weil das mechanische Organ für einen anschließenden Austrag von Produkt in Bewegung bleiben soll. Die Beobachtung der Temperatur und die genannte Zeitspanne zwischen Trennen der Unterdruckquelle und Aufhebung des reduzierten Drucks bieten auch hier einen Schutz vor Deflagration im Sinne der vorliegenden Erfindung.

Ein weiteres Anzeichen für eine beginnende Deflagration ist das Auftreten von Zersetzungsgasen. Die Zersetzungsgase bewirken einerseits einen Druckanstieg, dessen Detektion und Nutzung zur Absicherung bereits in den oberen Abschnitten beschrieben wurde. Andererseits lassen sich die meisten Zersetzungsgase durch geeignete Sensoren detektieren. Besonders vorteilhaft ist, dass die Zersetzungsgase mit Beginn der Zersetzung auftreten, das heißt zu einem Zeitpunkt, an welchem die Zündquelle gerade wirksam wird und somit schon bevor eine selbständig fortpflanzende Zersetzung, das heißt eine Deflagration, einsetzt. Durch geeignete Detektion der Zersetzungsgase lässt sich eine beginnende Deflagration somit deutlich früher erkennen, als dies durch einen Druck- und/oder Temperaturanstieg oder einem erhöhten Gasfluss der Fall ist. Bei den bei Deflagrationen entstehenden Zersetzungsgasen handelt es sich in der Regel um leicht zu detektierende Gase wie Kohlenmonoxid, Kohlendioxid, Stickstoff-Oxide, Schwefeloxide, Cyanwasserstoff, Cyanurate, und andere.

Die Zersetzungsgase sind für den zu verarbeitenden Stoff zu bestimmen, und es sind entsprechend Sensoren zu installieren. Die Sensoren können im Apparat oder in den verbundenen Rohrleitungen installiert sein. Eine Installation auf der Auslassseite der Unterdruckquelle ist ebenfalls möglich, in diesem Fall ist aber nur eine Überwachung bei wirksamer Unterdruckquelle möglich. Für eine Überwachung nach Trennung der Unterdruckquelle kommen Sensoren auf der Druckseite der Unterdruckquelle nicht in Frage.

Bei den Sensoren handelt es sich um dem Fachmann bekannte Sensoren, welche auf Basis von spektroskopischen, elektrochemischen oder sonstigen Prinzipien basierende Messverfahren wie UV/VIS-Photometrie, UV-Fluoreszenzanalyse, IR-Spektroskopie, Chemolumineszenz-Analyse, AAS, elektrochemische Messzellen, etc.

Werden bei wirksamer Unterdruckquelle Zersetzungsgase detektiert, so ist von einer beginnenden Zersetzung auszugehen. Eine mögliche erste Gegenmaßnahme gegen ein Entstehen bzw. Fortschreiten der Deflagration ist das Ausschalten der Antriebe der potentiellen mechanischen Zündquellen unter Beibehaltung des reduzierten Drucks. Werden nach angemessener Zeit keine Zersetzungsgase mehr detektiert, so ist davon auszugehen, dass keine Deflagration vorliegt bzw. die beginnende Zersetzung verlöscht ist. Der reduzierte Druck wird aufgehoben. Gegebenenfalls kann die Verarbeitung weiter fortgeführt werden. Dies ist unter Berücksichtigung der jeweiligen Umstände im Einzelfall zu entscheiden.

Werden die Zersetzungsgase jedoch auch nach Ausschalten der Antriebe der potentiellen mechanischen Zündquellen weiter detektiert und nimmt deren Konzentration weiter zu, so ist eine Deflagration nicht auszuschließen. Es sind entsprechend Gegenmaßnahmen zu treffen. Als Gegenmaßnahme gegen die beginnende Deflagration erfolgt die Zugabe eines Löschmittels, bevorzugt die Zufuhr von Wasser oder von mit Tensiden versetztem Wasser zum Ablöschen der Deflagration. Die Zugabe des Löschmittels kann zum Beispiel automatisch an einen gewissen Grenzwert für die Zersetzungsgase gekoppelt werden, bei dessen Überschreiten im jeweiligen Prozessschritt die Quenche automatisch ausgelöst wird. Der Grenzwert ist jeweils entsprechend dem jeweiligen Verfahren festzulegen.

Werden nach Trennung der Unterdruckquelle Zersetzungsgase detektiert, so kann dies ein Anzeichen für eine beginnende Deflagration sein. Bevorzugt im Sinne dieser Erfindung erfolgt eine Wiederherstellung der Verbindung zur Unterdruckquelle , um den reduzierten Druck wieder herzustellen und ein Verlöschen der Deflagration zu bewirken. Die beginnende Deflagration kann aber auch durch Zugabe von Wasser, mit Tensiden versetztem Wasser oder eines andern Stoffes gelöscht werden.

Werden in der Wartezeit nach dem Trennen der Unterdruckquelle keine Zersetzungsgase detektiert, so kann der Unterdruck gebrochen werden, ohne dass eine Deflagration zu befürchten ist.

Die Zeitspanne zwischen Trennen der Unterdruckquelle und Aufhebung des reduzierten Drucks wird je nach Größe und Konstruktion des Apparates, der Leckrate, dem Füllgrad, den Eigenschaften des zu verarbeitenden Stoffes und gegebenenfalls weiterer Parameter unterschiedlich festgelegt. Durch die permanente Überwachung schon bei wirksamer Unterdruckquelle kann die Zeitspanne sehr kurz gewählt werden. Erfindungsgemäß beträgt die Zeitspanne 0,5 bis 20 Minuten, bevorzugt 1 bis 5 Minuten.

Der Antrieb der potentiellen mechanischen Zündquelle kann in dem im vorherigen Abschnitt beschriebenen Verfahren nach Trennen der Unterdruckquelle abgeschaltet werde, oder auch noch in Betrieb sein.

Bevorzugt wird der Antrieb der potentiellen mechanischen Zündquelle vor oder gleichzeitig mit Trennen der Unterdruckquelle ausgeschaltet.

Die potentielle mechanische Zündquelle kann aber auch nach Trennen der Unterdruckquelle weiter in Betrieb bleiben. Dies mag bei manchen Apparaten erforderlich sein, um zum Beispiel ein Agglomerieren von Partikeln zu verhindern, oder weil das mechanische Organ für einen anschließenden Austrag von Produkt in Bewegung bleiben soll. Die Detektion möglicher Zersetzungsgase und die genannte Zeitspanne zwischen Trennen der Unterdruckquelle und Aufhebung des reduzierten Drucks bieten auch hier einen Schutz vor Deflagration im Sinne der vorliegenden Erfindung.

Ein verminderter Druck im Sinne der vorliegenden Erfindung ist ein Druckbereich von ≤ 500 mbara, besonders bevorzugt ein Druckbereich ≤ 100 mbara, besonders bevorzugt in ein Druckbereich ≤ 20 mbara. Aus wirtschaftlichen und technischen Gründen wird als untere Grenze des Druckbereichs innerhalb des Gefäßes ≥2 mbara, bevorzugt ≥10 mbara empfohlen.

Die Aufhebung des reduzierten Druckes, auch Brechen des reduzierten Drucks genannt, erfolgt mit den dem Fachmann bekannten gängigen Verfahren. Typischerweise wird zuerst die Verbindung zur Unterdruckquelle getrennt. Im nächsten Schritt wird über eine geeignete Zuleitung und ein darin befindliches Ventil Gas zugeführt. Häufig wird ein inertes Gas wie Stickstoff zugeführt, um mögliche Oxidationsreaktionen (welche sowohl Einbußen in der Qualität als auch zu gefährlichen exothermen Reaktionen führen könnten). Möglich ist aber auch die Zufuhr von Luft oder anderen Gasen. Der reduzierte Druck wird bis auf den Bereich des Atmosphärendrucks angehoben, wobei auch Drücke oberhalb des Atmosphärendrucks eingestellt werden können. Die Aufhebung des reduzierten Drucks sollte nicht schlagartig erfolgen. Die Dauer und Intensität der Gaszufuhr wird je nach Größe und Konstruktion des Apparates, der Leckrate, dem Füllgrad, den Eigenschaften des zu verarbeitenden Stoffes und gegebenenfalls weiterer Parameter unterschiedlich festgelegt. In der Regel liegt die Zeitspanne für das Aufhebung des reduzierten Drucks im Bereich von einer bis 30 Minuten. Möglich ist auch eine stufenweise Aufhebung des reduzierten Drucks, bei welcher in einer ersten Stufe bis zu einem bestimmten Druck unterhalb Atmosphärendruck entspannt wird und erst in einem weiteren Schritt entweder auf Atmosphärendruck oder ein weiteres Druckniveau unterhalb des Atmosphärendrucks entspannt wird. Bei einer stufenweisen Aufhebung des reduzierten Druckes erfolgt bei den jeweiligen Druckstufen eine weitere Überprüfung auf eine mögliche beginnende Deflagration erfolgen anhand des Druckes, der Temperatur und/oder der Zersetzungsgase, wie vorab beachrieben. Auch können bei den jeweiligen Druckstufen Wartezeiten festgelegt werden, die für sich genommen ebenfalls eine Verminderung des Risikos einer Deflagration bewirken. Das Druckniveau kann auch auf einen Bereich oberhalb des Atmosphärendrucks angehoben werden, ohne dass beim Übergang von Druckniveau unterhalb des Atmosphärendrucks auf einen Druck oberhalb des Atmosphärendrucks der Atmosphärendruck gesondert als Zwischenniveau eingestellt wird.

Das erfindungsgemäße Verfahren ist für die Verarbeitung und Handhabung deflagrationsfähiger fester Substanzen einschließlich explosionsfähiger fester Substanzen anwendbar.

Als deflagrationsfähig im Sinne dieser Erfindung gelten alle Stoffe, welche entweder nach dem UN Prüfbuch "Transportation of Dangerous Goods, Manual of Tests and Criteria", 5th Revised Edition, 2009, Deflagration, unter Abschnitt 23.2.2 genannten Kriterien als deflagrationsfähig einzuordnen sind (Question "Can it propagate adeflagration?" - Answer "yes, rapidely" oder" yes, slowly"), und / oder im Test VDI2263-1 bei Ausprüfung bei der in der Verarbeitung vorgesehenen Temperatur und einer Zündung von oben oder unten mit einer Zündpille, Zündwendel oder Glühkerze, letztere mit einer aufgenommenen Leistung von mindestens 40 W und einer Einwirkdauer von 300 Sekunden eine sich selbsttätige Zersetzung aufweisen, wobei die Zersetzung ein Form einer Zersetzungsfront als auch in Form von Zersetzungskanälen fortschreiten kann.

Typische deflagrationsfähigen Stoffe im Sinne der vorliegenden Erfindungen sind organische Verbindungen mit funktionellen Gruppen wie Kohlenstoff-Kohlenstoff Doppel- und Dreifachbindungen wie Acetylene, Acetylide, 1,2 Diene; gespannte Ringverbindungen wie Azirine oder Epoxide, Verbindungen mit aneinander grenzenden N-Atomen wie Azo- und Diazoverbindungen, Hydrazine, Azide, Verbindungen mit aneinander grenzenden O-Atomen wie Peroxiden und Ozoniden, Sauerstoff-Stickstoff-verbindungen wie Hydroxylamine, Nitrate, N-Oxide, 1,2 Oxalate, Nitro- und Nitroso-verbindungen; Halogen-Stickstoffverbindungen wie Chloramine und Fluoramine, Halogen-Sauerstoffverbindungen wie Chlorate, Perchlorate, Jodosyl-verbindungen; Schwefel-Sauerstoff-verbindungen wie Sulphonylhalide, Sulphonylcyanide, und Verbindungen mit Kohlenstoff-Metall-Bindungen und Stickstoff-Metall-Bindungen wie Grignard-reagenzien oder Organo-Lithium-verbindungen. Deflagrationsfähigen Feststoffe sind deflagrationsfähigen Stoffe in fester Form, wobei der Stoff rein oder gemischt in fester Form ist, z.B. als Pulver oder Granulate in beliebiger Korngröße vorhanden ist. Als deflagrationsfähige Feststoffe im Sinne dieser Erfindung gelten auch deflagrationsfähige Flüssigstoffe, welche an nicht deflagrationsfähigen Feststoffen resorbiert sind und somit in fester Form vorliegen. Als deflagrationsfähige Feststoffe im Sinne dieser Erfindung gelten ebenfalls deflagrationsfähige Stoffe in fester Form, welche noch Reste von Wasser oder andere Flüssigkeiten wie Lösungsmittel aufweisen (feuchte Feststoffe). Die Korngröße und die Korngrößenverteilung haben bekanntermaßen Einfluss auf das Deflagrationsverhalten, die beiden Parameter stellen für die vorliegende Erfindung aber keine Einschränkung dar.

Verarbeitung und Handhabung im Sinne dieser Anmeldung sind Verfahrens- und Handhabungsschritte zur Herstellung, Verarbeitung, Lagerung und dem Transport von deflagrationsfähigen Feststoffen, insbesondere Filtrieren, Trocknen, Mahlen, Sieben, Mischen, Homogenisieren, Granulieren, Kompaktieren, Abfüllen, Lagern und Transport in einem Transportbehälter, sowie mechanische Transport wie z.B. die die Förderung in Förderschnecken oder durch Zellradschleusen. Erfindungsgemäß wird das Verfahren für eine trocken mechanische Verarbeitung angewandt. Im Sinne der Erfindung können diese Verfahrensschritte sowohl in oder mit Hilfe von Apparaten, bei welchen der bearbeitete Feststoff mit Hilfe mechanischer Einrichtungen bewegt wird, wie zum Beispiel in einem Pflugscharmischer, durchgeführt werden, als auch in oder mit Hilfe von Apparaten ohne mechanische Einrichtungen, wie zum Beispiel Silos. Die Reduzierung des Drucks in den Apparaten erfolgt durch dem Fachmann bekannte Techniken mittels Unterdruckpumpen wie zum Beispiel Verdrängerpumpen, Strahlpumpen, Drehschieberpumpen, Zentrifugalpumpen, Wasserringpumpen, Wälzkolbenpumpen und anderen zur Erzeugung des gewünschten Drucks geeignete Aggregate.

### Beispiele

Die Erfindung wird nachfolgend an Hand der Mischung von 1.000 kg Dichlofluanid (Euparen) mit 1.000 kg Kieselgur in einem unter Vakuum betriebenen Schaufelmischer beschrieben. Der Schaufeltrockner hat ein Volumen von 5 m3. Über eine Vakuumpumpe mit einer Förderleistung von 350 m3/h wird ein Vakuum von 50 mbar im Mischer eingestellt. Die Beschickung erfolgt über eine Vakuumschleuse bei laufender Rührerwelle. Die Leckrate des Mischers wurde vor Beschickung mit 50 l/h ermittelt. Im Gasraum des Mischers sind ein Drucksensor und ein Temperatursensor angebracht. Durch ein Ventil kann zum Ablöschen einer Deflagration Wasser mit einer Rate von 100 m3/h zugegeben werden. Nach Beendigung des Mischvorgangs wird der Druck im Mischer durch Zugabe von Stickstoff auf Umgebungsdruck gebracht. (Durch die Zugabe des Inertgases Stickstoff wird sichergestellt, dass das Produkt nicht durch mögliche Oxidationsvorgänge geschädigt wird).

Dichlofluanid und das Gemisch mit Kieselgur sind entsprechend dem Test VDI2263-1 deflagrationsfähig. Die nach VDI2263-1 bestimmte Deflagrationsgeschwindigkeit beträgt 2 mm/sec bei Zündung von unten und 0,14 mm/sec Zündung von oben. Bei dem Mischvorgang liegt auf Grund einer anlaufenden Mischerschaufel eine potentielle Zündquelle vor

### Beispiel 1 - Detektion einer beginnenden Deflagration durch Druckanstieg und Beenden der Deflagration durch weitere Reduzierung des Druckes

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelförmig um die Zündstelle ausbreitet. Durch die bei der Zersetzung freiwerdenden Gase steigt der Druck an. Nach 5 Minuten ist der Druck auf den Alarmwert von 70 mbar angestiegen. Der Anlagenfahrer stellt innerhalb einer Minute die Verbindung zum Vakuum wieder her, der Druck wird innerhalb von 5 Minuten auf 50 mbar abgesenkt. Der Druck wird für 30 Minuten bei 50 mbar gehalten, Anschließend wird der Apparat wieder von der Vakuumquelle durch Schließen des Ventils in der Verbindungsleitung zur Vakuumpumpe getrennt. Über die nächsten 15 Minuten wird kein weiterer Druckanstieg beobachtet. Der reduzierte Druck wird durch Zugabe von Stickstoff aufgehoben, der Trockner kann gefahrlos entleert werden.

Die Deflagration ist im Vakuum erloschen.

### Beispiel 2 - Detektion einer beginnenden Deflagration durch Druckanstieg und Beenden der Deflagration durch Zugabe von Wasser

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelförmig um die Zündstelle ausbreitet. Durch die bei der Zersetzung freiwerdenden Gase steigt der Druck an. Nach 5 Minuten ist der Druck auf den Alarmwert von 70 mbar angestiegen. Der Anlagenfahrer stellt nach weiteren 10 Minuten die Verbindung zum Vakuum wieder her, der Druck ist unterdessen auf 400 mbar angestiegen, Der Druck wird innerhalb von 8 Minuten auf 100 mbar abgesenkt und steigt nach weiteren 20 Minuten auf 150 mbar an. Der Anlagenfahrer aktiviert die Wasserzufuhr, es werden 1.0001 l Wasser zugegeben, das Mischorgan wird wieder eingeschaltet.

Die Deflagration wird durch die Zugabe von Wasser gestoppt.

### Beispiel 3 - Detektion einer beginnenden Deflagration durch Temperaturanstieg und Beenden der Deflagration durch weitere Reduzierung des Druckes

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelförmig um die Zündstelle ausbreitet. Durch die bei der Zersetzung freiwerdenden heißen Gase steigt die Temperatur im Gasraum an. Nach 8 Minuten steigt die Temperatur im Gasraum auf den Alarmwert von 40 °C. Der Anlagenfahrer stellt innerhalb einer Minute die Verbindung zum Vakuum wieder her, Der Druck wird innerhalb von 5 Minuten auf 50 mbar abgesenkt. Die Temperatur sinkt auf < 30 °C. Der Druck wird für 30 Minuten bei 50 mbar gehalten, Anschließend wird der Apparat wieder von der Vakuumquelle durch Schließen des Ventils in der Verbindungsleitung zur Vakuumpumpe getrennt. Über die nächsten 30 Minuten wird kein weiterer Temperaturanstieg beobachtet. Der reduzierte Druck wird durch Zugabe von Stickstoff aufgehoben, der Trockner kann gefahrlos entleert werden.

Die Deflagration ist im Vakuum erloschen.

### Beispiel 4 - Detektion einer beginnenden Deflagration durch Temperaturanstieg und Beenden der Deflagration durch Zugabe von Wasser

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelförmig um die Zündstelle ausbreitet. Durch die bei der Zersetzung freiwerdenden heißen Gase steigt die Temperatur im Gasraum an. Nach 10 Minuten steigt die Temperatur im Gasraum auf den Alarmwert von 40 °C. Die Temperatur steigt weiter an und erreicht nach weiteren 5 Minuten den Schaltwert von 80 °C, durch welchen die Wasserzufuhr ausgelöst wird, es werden 1.000 l Wasser zugegeben, das Mischorgan wird wieder eingeschaltet.

Die Deflagration wird durch die Zugabe von Wasser gestoppt.

### Beispiel 5 - Detektion einer beginnenden Deflagration durch Detektion der Zersetzungsgase im laufenden Betrieb und Beenden der Deflagration durch Abschalten des Mischers und Beibehalten des Vakuums

Zusätzlich zu der für Beispiel 1-4 beschriebenen Apparatur ist auf der Druckseite der Vakuumpumpe ein elektrochemischer Sensor zur Detektion von SO2 installiert.

Die Rührerschaufel läuft an einer an die Wandung. Durch die Erhitzung zersetzt sich lokal etwas Dichlofluanid. Der SO2-Gehalt im Abgas der Pumpe steigt von 0 ppm (Nachweisgrenze des Sensors) auf 50 ppm an. Der Mischer wird ausgeschaltet. Der SO2-Gehalt im Abgas sinkt nach 10 Minuten wieder ab und erreich nach 40 Minuten wieder die Nachweisgrenze.

Der Mischer wird von der Vakuumquelle getrennt, der reduzierte Druck wird durch Zugabe von Stickstoff aufgehoben, Der Trockner kann gefahrlos entleert werden.

Eine Deflagration wurde durch Abkühlen der potentiellen Zündquelle unter Vakuum verhindert

### Beispiel 6 - Detektion einer beginnenden Deflagration durch Detektion der Zersetzungsgase im laufenden Betrieb und Beenden der Deflagration durch Zugabe von Wasser

Zusätzlich zu der Apparatur in für Beispiel 1-4 beschriebenen Apparatur ist auf der Druckseite der Vakuumpumpe ein elektrochemischer Sensor zur Detektion von SO2 installiert.

Die Rührerschaufel läuft an einer an die Wandung. Durch die Erhitzung zersetzt sich lokal etwas Dichlofluanid. Der SO2-Gehalt im Abgas der Pumpe steigt von 0 ppm (Nachweisgrenze des Sensors) auf 50 ppm an. Der Mischer wird ausgeschaltet. Durch die erhitzte Mischerschaufel wird eine Deflagration ausgelöst. Der SO2-Gehalt im Abgas steigt weiter an. Nach 15 Minuten erreicht er einen Wert von 200 ppm. Der Anlagenfahrer aktiviert die Wasserzufuhr, Es werden 1.000 l Wasser zugegeben, das Mischorgan wird wieder eingeschaltet.

Die Deflagration wird durch die Zugabe von Wasser gestoppt.

### Beispiel 7 - Detektion einer beginnenden Deflagration durch Detektion der Zersetzungsgase und Beenden der Deflagration durch weitere Reduzierung des Druckes

Zusätzlich zu der Apparatur in für Beispiel 1-4 beschriebenen Apparatur ist an dem Trockner eine UV-Lumineszenz-Messzelle zur Detektion von SO2 installiert..

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelkugelförmig um die Zündstelle ausbreitet.

Der SO2-Gehalt im Mischer steigt von 0 mg/l /Nachweisgrenze) auf 0,5 mg/l. Der Anlagenfahrer stellt innerhalb einer Minute die Verbindung zum Vakuum wieder her, der Druck wird innerhalb von 5 Minuten auf 50 mbar abgesenkt. Der SO2-Gehalt im Abgas sinkt nach 10 Minuten wieder ab und erreicht nach 30 Minuten wieder die Nachweisgrenze.

Anschließend wird der Apparat wieder von der Vakuumquelle durch Schließen des Ventils in der Verbindungsleitung zur Vakuumpumpe getrennt. Über die nächsten 10 Minuten wird kein weiterer Anstieg des SO2-Gehaltes beobachtet. Der reduzierte Druck wird durch Zugabe von Stickstoff aufgehoben, der Trockner kann gefahrlos entleert werden.

Die Deflagration ist im Vakuum erloschen.

### Beispiel 8 - Detektion einer beginnenden Deflagration durch Detektion der Zersetzungsgase und Beenden der Deflagration durch Zugabe von Wasser

Zusätzlich zu der Apparatur in für Beispiel 1-4 beschriebenen Apparatur ist an dem Trockner eine UV-Lumineszenz-Messzelle zur Detektion von SO2 installiert..

Nach Ausschalten des Mischorgans wird der Apparat von der Vakuumquelle durch Schließen des Ventils in der Verbindungsleitung zur Vakuumpumpe getrennt, es wird aber kein Gas zur Aufhebung des Vakuums zugeführt. An der durch Anlaufen an die Wandung erhitzten Rührerschaufel wird eine Deflagration ausgelöst, welche sich kegelkugelförmig um die Zündstelle ausbreitet.

Der SO₂-Gehalt im Mischer steigt von 0 ppm /Nachweisgrenze) auf 10 mg/l Der Anlagenfahrer aktiviert die Wasserzufuhr, es werden von 1.000 l Wasser zugegeben, das Mischorgan wird wieder eingeschaltet.

Die Deflagration wird durch die Zugabe von Wasser gestoppt.

## Patentansprüche

1. Verfahren zur Verarbeitung und/oder Handhabung von deflagrationsfähigen Feststoffen und/oder Gemischen, **dadurch gekennzeichnet, dass** die Verarbeitung und/oder Handhabung in einer Umgebung unter reduziertem Druck von <500 mbara erfolgt und eine Aufhebung des reduzierten Drucks erst dann erfolgt, wenn eine Deflagration ausgeschlossen werden kann, wobei die Verarbeitung und/oder Handhabung ein oder mehrere Verfahrensschritten umfasst, welche selektiert sind aus einer Gruppe umfassend aus Filtration, Mahlen, Sieben, Mischen, Homogenisieren, Granulieren, Kompaktieren, Abfüllen, Trocknen, Lagern und Transport in einem Transportbehälter sowie sonstigen Schritten in Apparaten mit mechanischen Einbauten.

2. Verfahren nach Anspruch 1, **dadurch gekennzeichnet, dass** eine Deflagration dadurch auszuschließen ist, dass nach einer Trennung von einer Unterdruckquelle der Druckanstieg im Apparat nicht größer ist, als die Leckrate und/oder ein thermischer Druckaufbau im Apparat.

3. Verfahren nach Anspruch 1, **dadurch gekennzeichnet, dass** eine Deflagration dadurch auszuschließen ist, dass nach einer Trennung von einer Unterdruckquelle kein Temperaturanstieg in dem deflagrationsfähigen Feststoff oder Gemisch und/oder im Gasraum des Apparates festgestellt wird, welcher höher ist als jener der durch den Energieeintrag bedingt ist.

4. Verfahren nach Anspruch 2 oder 3, **dadurch gekennzeichnet, dass** zwischen Trennen der Unterdruckquelle und Aufheben des reduzierten Drucks eine Wartezeit von 5 bis 60 Minuten eingehalten wird.

5. Verfahren nach Anspruch 1, **dadurch gekennzeichnet, dass** eine Deflagration dadurch auszuschließen ist, dass während der Verarbeitung bei einer wirksamen Unterdruckquelle kein Temperaturanstieg in dem deflagrationsfähigen Feststoff oder Gemisch und/oder im Gasraum des Apparates festgestellt wird, welcher höher ist als jener der durch den Energieeintrag bedingt ist.

6. Verfahren nach Anspruch 1, **dadurch gekennzeichnet, dass** eine Deflagration dadurch auszuschließen ist, dass nach einer Trennung von einer Unterdruckquelle im Apparat keine Zersetzungsgase detektiert werden.

7. Verfahren nach Anspruch 1, **dadurch gekennzeichnet, dass** eine Deflagration dadurch auszuschließen ist, dass während der Verarbeitung bei einer wirksamen Unterdruckquelle keine Zersetzungsgase festgestellt werden.

8. Verfahren zur Verarbeitung und/oder Handhabung von deflagrationsfähigen Feststoffen und/oder Gemischen, **dadurch gekennzeichnet, dass** die Verarbeitung und/oder Handhabung in einer Umgebung unter reduziertem Druck von <500 mbara erfolgt und vor Aufhebung des reduzierten Drucks eine Deflagration nicht auszuschließen ist und in der Folge durch Aufrechterhalten des Unterdrucks die Deflagration zum Verlöschen gebracht wird, wobei die Verarbeitung und/oder Handhabung ein oder mehrere Verfahrensschritten umfasst, welche selektiert sind aus einer Gruppe umfassend aus Filtration, Mahlen, Sieben, Mischen, Homogenisieren, Granulieren, Kompaktieren, Abfüllen, Trocknen, Lagern und Transport in einem Transportbehälter sowie sonstigen Schritten in Apparaten mit mechanischen Einbauten.

9. Verfahren zur Verarbeitung und/oder Handhabung von deflagrationsfähigen Feststoffen und/oder Gemischen, **dadurch gekennzeichnet, dass** die Verarbeitung und/oder Handhabung in einer Umgebung unter reduziertem Druck von <500 mbara erfolgt und vor Aufhebung des reduzierten Drucks eine Deflagration nicht auszuschließen ist und in der Folge durch Zugabe eines Löschmittels in den unter Unterdruck stehenden Apparat die Deflagration beendet wird, wobei die Verarbeitung und/oder Handhabung ein oder mehrere Verfahrensschritten umfasst, welche selektiert sind aus einer Gruppe umfassend aus Filtration, Mahlen, Sieben, Mischen, Homogenisieren, Granulieren, Kompaktieren, Abfüllen, Trocknen, Lagern und Transport in einem Transportbehälter sowie sonstigen Schritten in Apparaten mit mechanischen Einbauten, und es sich bei dem Löschmittel bevorzugt um Wasser oder um mit Tensiden versetztes Wasser handelt und der Druck im Apparate bei Beginn der Löschmittel-Zugabe < 700 mbar beträgt.

10. Verfahren nach Anspruch 9, **dadurch gekennzeichnet, dass** das Löschmittel Wasser ist.

11. Verfahren nach Anspruch 9, **dadurch gekennzeichnet, dass** das Löschmittel Tensid versetztes Wasser ist.

12. Verfahren nach Anspruch 9 bis 11, **dadurch gekennzeichnet, dass** die Zugabe des Löschmittels automatisch erfolgt, wenn ein Grenzwert für den Druck erreicht wird.

13. Verfahren nach Anspruch 1 bis 12, **dadurch gekennzeichnet, dass** der deflagrationsfähige Feststoff ausgewählt ist aus der Gruppe umfassend Acetylene, Acetylide, 1,2 Diene, Azirine, Epoxide, Azo-, Diazoverbindungen, Hydrazine, Azide, Peroxiden, Ozoniden, Hydroxylamine, Nitrate, N-Oxide, 1,2 Oxalate, Nitro- und Nitroso-verbindungen, Chloramine, Fluoramine, Chlorate, Perchlorate, Jodosyl-Verbindungen, Sulphonylhalide, Sulphonylcyanide, Grignard-Reagenzien und Organo-Lithium-Verbindungen.

14. Verfahren nach Anspruch 1 bis 12, **dadurch gekennzeichnet, dass** das Gemisch aus mindestens einem deflagrationsfähigen Stoff besteht, ausgewählt aus der Gruppe umfassend Acetylene, Acetylide, 1,2 Diene, Azirine, Epoxide, Azo-, Diazoverbindungen, Hydrazine, Azide, Peroxiden, Ozoniden, Hydroxylamine, Nitrate, N-Oxide, 1,2 Oxalate, Nitro- und Nitroso-verbindungen, Chloramine, Fluoramine, Chlorate, Perchlorate, Jodosyl-Verbindungen, Sulphonylhalide, Sulphonylcyanide, Grignard-Reagenzien und Organo-Lithium-Verbindungen.
